# FASCICULE DE BREVET EUROPEEN

(11) **EP 1 559 068 B1**
(45) Date de publication et mention de la délivrance du brevet: **28.05.2008**
(21) Numéro de dépôt: 03807950.5
(22) Date de dépôt: 10.10.2003
(51) Int. Cl.: G06K 19/077

(54) **MODULE ELECTRONIQUE COMPORTANT UN ELEMENT APPARENT SUR UNE FACE ET PROCEDE DE FABRICATION D'UN TEL MODULE**
ELEKTRONISCHES MODUL MIT EINEM AUF EINER OBERFLûCHE EXPONIERTENELEMENT UND VERFAHREN ZU SEINER HERSTELLUNG
ELECTRONIC MODULE COMPRISING AN ELEMENT EXPOSED ON ONE SURFACE AND METHOD FOR MAKING SAME

(30) Priorité: 11.10.2002 CH 20021690
(43) Date de publication de la demande: 03.08.2005
(73) Titulaire: Nagraid SA, 2322 Crêt-du-Locle (CH)
(72) Inventeur: DROZ, François, CH-2035 Corcelles (CH)
(74) Mandataire: Wenger, Joel-Théophile
(86) Numéro de dépôt international: PCT/IB2003/004481
(87) Numéro de publication internationale: WO 2004/034320

(56) Documents cités:
- EP-A- 1 085 459
- FR-A- 2 760 113
- PATENT ABSTRACTS OF JAPAN vol. 015, no. 310 (M-1144), 8 août 1991 (1991-08-08) -& JP 03 114788 A (CITIZEN WATCH CO LTD;OTHERS: 01), 15 mai 1991 (1991-05-15)

## Description

La présente invention est du domaine des modules électroniques comportant un élément apparent sur une face et des procédés de fabrication d'un tel module. On entend ici par module un ensemble obtenu par une superposition de couches isolantes laminées présentant au moins une fenêtre dans laquelle est inséré un élément. La face apparente de l'élément affleure la surface extérieure de la face du module.

L'élément apparent est défini ici soit comme un composant électronique fixe tel qu'un affichage, un capteur d'empreinte digitale, une touche à membrane, un module à contacts, une cellule solaire, un vibreur sonore ou tout autre élément similaire, soit comme un composant amovible tel qu'une batterie. Cet élément peut être connecté à un circuit électronique situé entre deux couches de matière isolante constituant les faces du module.

Le circuit électronique situé à l'intérieur du module est formé par un (telle qu'une antenne) ou plusieurs composants connectés entre eux servant à définir les fonctions du module. Par exemple, dans un module sous forme d'une carte de paiement sans contact, le circuit est constitué par une puce connectée à une antenne. De plus, il peut être connecté à un affichage apparent sur une des faces de la carte permettant une visualisation de données contenues dans la puce telles que le montant disponible ou les débits effectués.

Un module de ce type est assemblé par le placement d'un circuit électronique sur une première feuille de matière isolante comportant une fenêtre dans laquelle est logé un composant électronique. Le circuit électronique est ensuite connecté au composant, puis le tout est enrobé en général d'une résine avant laminage d'une seconde feuille isolante venant se superposer à la première. Le module ainsi fabriqué est un sandwich constitué par deux feuilles isolantes entre lesquelles se trouve le circuit électronique enrobé de liant. Sur une des faces extérieures du module apparaît une face du composant électronique logé dans sa fenêtre.

Par exemple le document FR 2760113 décrit un procédé de fabrication d'une carte mixte pouvant fonctionner avec ou sans contact. L'élément supportant les contacts est placé dans une cavité formée par une fenêtre découpée dans un substrat et avec un fond constitué par une feuille adhésive sur laquelle le substrat est posé. Une antenne est connectée sur des plages conductrices de l'élément puis le tout est recouvert d'un liant avant l'assemblage d'un film isolant de protection. La feuille adhésive sur la première face de la carte est enlevée à la fin du processus de fabrication laissant apparaître les contacts à fleur de la surface de la carte.

De nombreux modules fabriqués selon ce procédé sont rejetés lors du contrôle final de production car ils comportent des résidus de résine de remplissage dans le voisinage de la fenêtre où est situé le composant électronique. En effet, par exemple, lorsque le contour de la fenêtre est plus grand que celui du composant, la résine remplit l'espace laissé entre les bords de la fenêtre et le composant et peut déborder sur la face extérieure du module. Dans d'autres cas, la structure du composant peut comporter des rainures dans lesquelles la résine peut s'infiltrer par effet de capillarité et souiller la surface du module. Un tel module est soit rebuté, soit, il nécessite une opération supplémentaire de nettoyage afin d'éliminer les résidus de liant.

Lorsque l'élément à contact constitue un composant autonome, c'est à dire sans connections à une antenne ou à d'autres composants, il peut être chassé dans le cadre profilé d'une fenêtre formée dans un substrat d'épaisseur au moins égale à celle du composant. Le document JP03114788 décrit une méthode d'insertion d'un élément à contacts dans le substrat d'une carte comportant une fenêtre profilée de manière à retenir l'élément à fleur d'une des faces de la carte. L'élément est maintenu dans la fenêtre sur la face opposée aux contacts par une feuille isolante munie de reliefs s'adaptant sur la face arrière de l'élément.

Un autre document EP1085459 décrit une méthode de fabrication d'une carte mémoire à contacts où l'élément à contacts est inséré dans un cadre profilé formé dans une première partie d'un substrat. Un second substrat plan collé sur le premier constitue le fond d'une cavité délimitée par le contour du cadre servant de support à l'élément à contacts. Ce dernier est inséré dans la cavité de manière à ce que les contacts affleure la face du premier substrat.

Le document US2002/0050527 décrit un support de circuit intégré formé d'une feuille isolante constituant un cadre comportant une fenêtre et un film de renforcement enduit sur une face d'une couche adhésive sensible à la pression. Ce film est collé sur la face arrière de la feuille formant le cadre au moyen de la couche adhésive en recouvrant la fenêtre. Un module de circuit intégré incluant un substrat et le circuit intégré lui-même monté sur le substrat est placé dans la fenêtre du cadre et collé sur la couche adhésive du film. Selon une variante, une rainure relie la fenêtre et une portion du bord de la feuille formant le cadre de sorte que le cadre peut être divisé en plusieurs segments dans le but de faciliter l'enlèvement du module de circuit intégré hors de son support.

Le document US5026452 décrit une méthode de production d'une carte à circuit intégré incorporant un module de circuit intégré. La méthode comprend les étapes suivantes:
- préparation d'au moins une première feuille isolante comprenant une fenêtre destinée à recevoir le module de circuit intégré et d'au moins une seconde feuille isolante dépourvue de fenêtre,
- superposition sur la première feuille isolante d'une feuille adhésive de surface supérieure à celle de la fenêtre en recouvrant ladite fenêtre,
- superposition de la seconde feuille isolante sur la feuille adhésive de manière à recouvrir entièrement la première feuille isolante,
- insérer le module de circuit intégré dans la fenêtre de la première feuille isolante
- presser à chaud le module et toutes les feuilles superposées,
- appliquer au moins une feuille de protection de surface sans fenêtre afin de compléter l'assemblage préalablement obtenu pour former une carte.

Selon une variante, plusieurs feuilles isolantes comportant une fenêtre peuvent être superposées en alignant les fenêtres de chaque feuille de manière à former une cavité destinée à recevoir le module de circuit intégré. La feuille adhésive est placée sur la dernière feuille de l'empilement formé par les feuilles superposées avant l'assemblage et le pressage de la seconde feuille isolante dépourvue de fenêtre sur cette feuille adhésive.

Le but de la présente invention est de pallier les inconvénients soulevés ci-dessus afin de réduire le taux de rejet à la production. Un autre but est de minimiser les coûts de fabrication tout en augmentant la rapidité du procédé sans nuire à la qualité des modules.

Le but est atteint par un procédé de fabrication d'un module électronique selon la revendication 1.

Le film de protection est enduit ou constitué d'une substance adhésive qui est active soit à la température ambiante (substance auto-collante), soit activée sous l'effet de la chaleur et/ou de la pression. Par la suite, ce film de protection est appelé film adhésif.

Un premier rôle du film adhésif est de maintenir l'élément dans la fenêtre lors de manutentions de l'ensemble avant de poursuivre d'autres étapes de fabrication aboutissant à un module fini.

L'ensemble ainsi obtenu peut être complété par une étape supplémentaire qui consiste à laminer directement une seconde feuille isolante sur le film adhésif, pour former la seconde face du module. Une autre possibilité est de laminer un second ensemble sur le premier de façon à ce que les faces comportant l'élément se trouvent tournées vers l'extérieur. Le module final comporte ainsi un élément apparent sur chacune de ses faces.

Suivant l'épaisseur de l'élément, il est parfois nécessaire de superposer plusieurs feuilles isolantes munies de fenêtres de manière à former un empilement d'épaisseur sensiblement égale à celle de l'élément. Le film adhésif est ainsi placé sur une surface devenue plane avant le laminage de la seconde feuille ou du second ensemble.

Selon une variante, le film adhésif peut être suffisamment déformable pour s'appliquer sur un élément plus épais que la première feuille isolante. Des feuilles isolantes supplémentaires sont ensuite empilées sur cet ensemble afin de compenser l'épaisseur de l'élément.

La seconde face de l'élément dirigée vers l'intérieur du module peut présenter des plages conductrices de connexion permettant le soudage de conducteurs pour la liaison avec le circuit électronique.

Un module assemblé selon ce procédé ne présente plus aucun résidu de la matière de remplissage sur la face de l'élément. Le film adhésif bloque tout écoulement dans les interstices se trouvant par exemple entre les bords de la fenêtre et l'élément.

Selon une variante, le film adhésif peut recouvrir toute la surface de la première feuille isolante y compris la fenêtre où est logé l'élément, empêchant ainsi l'infiltration de matière de remplissage.

Selon une autre variante préférée, le film adhésif comporte une fenêtre en regard des contacts électriques disposés sur la face interne de l'élément de manière à faciliter le soudage des connexions au circuit électronique. Les dimensions de la fenêtre sont par exemple limitées à la zone de la surface de l'élément correspondant aux plages de connexion.

Selon une autre variante, la première feuille isolante est munie d'une cavité prévue pour positionner le circuit électronique. Dans le cas où le film adhésif s'étendrait sur toute la surface de la première feuille, il épouse la forme de la cavité ce qui permet le placement du circuit. Ce type de réalisation est en général effectué lorsqu'une épaisseur finale du module prédéterminée doit être respectée dans le cas où l'épaisseur du circuit serait plus importante

La présente invention a aussi comme objet un module électronique selon la revendication 16.

L'élément apparent à la surface du module peut être remplacé par un noyau inerte dans le procédé de fabrication du module. Le module une fois terminé, le noyau est retiré pour ne laisser qu'une cavité ayant la forme du noyau préalablement inséré sur une des faces du module. Cette cavité peut servir à une insertion ultérieure d'un composant particulièrement fragile qui ne supporterait, ni la température, ni la pression du laminage lors de la fabrication du module. Dans une variante, le fond de la cavité peut être garni de contacts sous forme de surfaces conductrices reliées au circuit électronique. Ces plages conductrices de contact sont disposées sur la face interne du noyau avant la mise en place du film adhésif. Elles sont maintenues dans le module fini par la matière de remplissage, le film adhésif et la connexion avec le circuit. Une telle cavité à contacts permet par exemple l'insertion d'une pile, d'un affichage, d'un capteur ou de tout autre composant.

L'invention sera mieux comprise grâce à la description détaillée qui va suivre et qui se réfère aux dessins annexés qui sont donnés à titre d'exemple nullement limitatif, dans lesquels:

Les figures 1-5 représentent des exemples qui ne font pas partie de l'invention. Les figures 6-9 démontrent des modules selon l'invention.
- la figure 1 représente une vue de dessus d'un module avec un élément inséré dans une fenêtre de la feuille isolante,
- la figure 2 représente une coupe selon A-A du module de la figure 1,
- la figure 3 montre une coupe d'une variante du module de la figure 1 avec un empilement de feuilles isolantes à fenêtre,
- la figure 4 montre une coupe d'une variante d'un module où des feuilles supplémentaires sont empilées après superposition du film adhésif sur l'élément,
- la figure 5 montre une coupe d'un module dont chaque face comporte un élément apparent,
- la figure 6 représente une vue de dessus d'un module selon l'invention comportant un circuit électronique avant l'apport du liant et de la seconde feuille isolante,
- la figure 7 représente une coupe selon A-A du module de la figure 5,
- la figure 8 montre une coupe d'une variante du module de la figure 5 avec une fenêtre dans le film adhésif,
- la figure 9 montre une coupe d'une variante de l'invention avec une cavité dans la première feuille isolante.

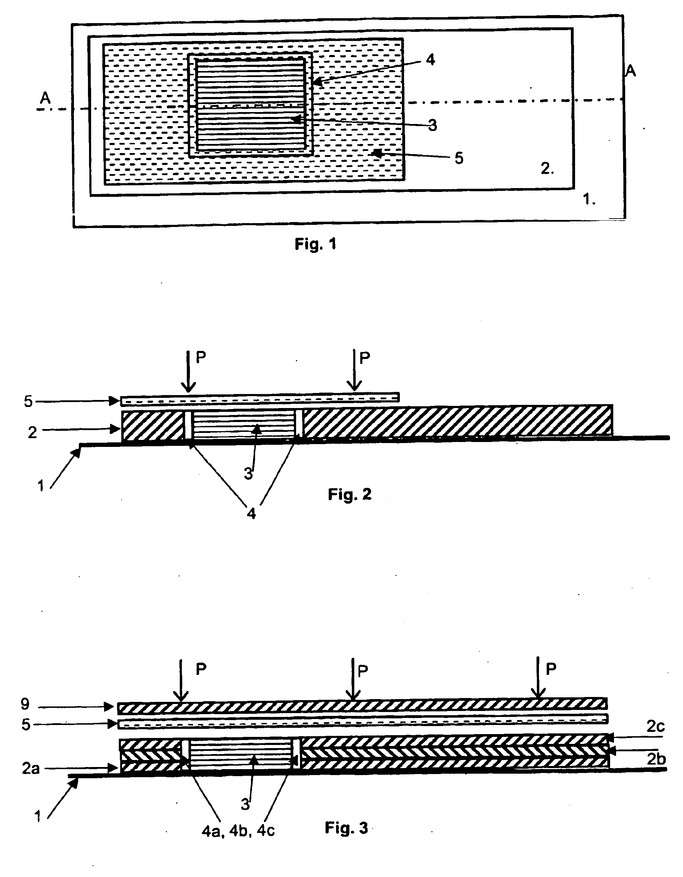

La figure 1 montre une vue de dessus d'un module électronique posé sur une surface de travail (1) qui comporte un élément (3) tel qu'un affichage, une touche, un module à contacts ou encore un noyau inerte. L' élément est inséré dans une ouverture ou fenêtre (4) pratiquée dans la feuille isolante en matière plastique (2) dont le contour est adapté à celui de l'élément (3). La face de l'élément (3) en contact avec la surface de travail se trouve sensiblement au même niveau que la face externe du module. Un film adhésif (5) recouvre la fenêtre (4), l'élément (3) et une zone de la feuille isolante (2) s'étendant autour de la fenêtre (4).

La figure 2 représente une coupe selon l'axe A-A de l'assemblage de la figure 1. L'épaisseur de la feuille isolante (2) atteint celle de l'élément (3) afin d'obtenir une face sensiblement plane après laminage par pressage (P) à chaud ou à froid du film adhésif (5).

Selon le module illustrée par la figure 3, plusieurs feuilles isolantes (2a, 2b, 2c) comportant chacune une fenêtre (4a, 4b, 4c) peuvent être empilées les unes sur les autres afin d'obtenir l'épaisseur souhaitable en fonction de celle de l'élément (3). Les contours des fenêtres (4a, 4b, 4c) de chaque feuille (2a, 2b, 2c) coïncident de manière à s'adapter au contour de l'élément (3). La première feuille à fenêtre (2a) constituant la face externe du module peut comporter un décor ou un marquage. Le film adhésif (5) est ensuite posé sur l'empilement (2a, 2b, 2c) de façon à recouvrir au moins le pourtour de la fenêtre (4c) de la dernière feuille (2c) de l'empilement. Le film adhésif (5) peut également s'étendre sur toute la surface de la feuille (2c). Une seconde feuille (9) externe sans fenêtre peut être ensuite laminée directement sur le film adhésif (5) pour constituer la seconde face du module pouvant également comporter un décor.

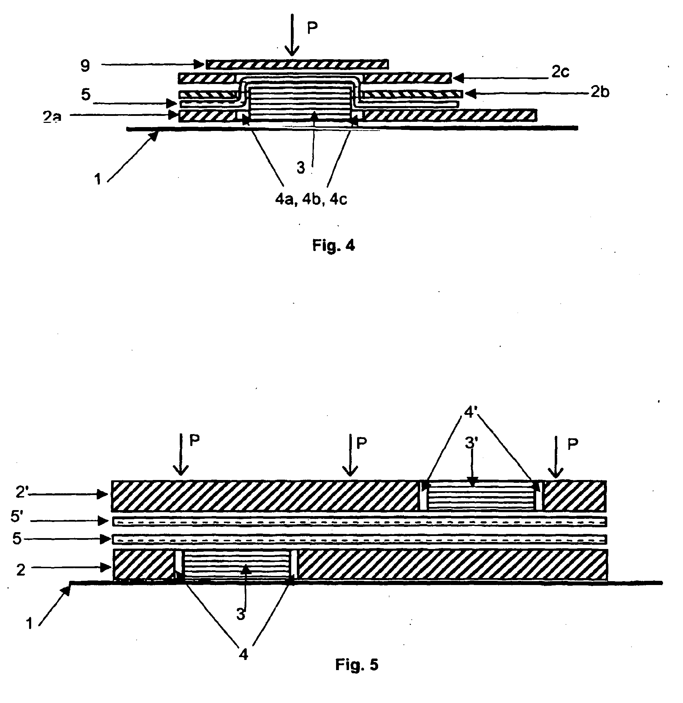

La figure 4 représente un module avec un élément (3) plus épais que la première feuille isolante (2a). Un film adhésif (5) souple et déformable est posé sur l'élément de manière à s'étendre aussi sur le pourtour de la fenêtre (4a) de cette première feuille (2a) où est logé l'élément (3). Puis des feuilles supplémentaires (2b, 2c) munies chacune d'une fenêtre (4b, 4c) dont le contour coïncide avec le contour de la fenêtre (4a) de la première feuille (2a) sont empilées. L'épaisseur de cet ensemble est sensiblement égale à l'épaisseur de l'élément (3). Finalement une dernière feuille (9) sans fenêtre constituant la seconde face du module est assemblée sur l'empilement, couvrant au moins la face interne de l'élément (3). Dans cet exemple, le rôle principal du film adhésif est de maintenir l'élément dans la fenêtre de la première feuille dans le but de faciliter la manutention. En effet, ce premier ensemble feuille isolante à fenêtre - élément - film adhésif (2a, 3, 5) peut être transporté sur un autre emplacement où seront effectuées les finitions consistant à assembler les autres feuilles (2b, 2c, 9) du module.

La figure 5 illustre un module dont chaque face est munie d'un élément (3, 3') apparent obtenu par superposition puis assemblage par collage de deux ensembles feuille isolante à fenêtre - élément - film adhésif (2, 3, 5, 2', 3', 5'), les faces de chaque ensemble munies du film adhésif (5, 5') étant en contact.

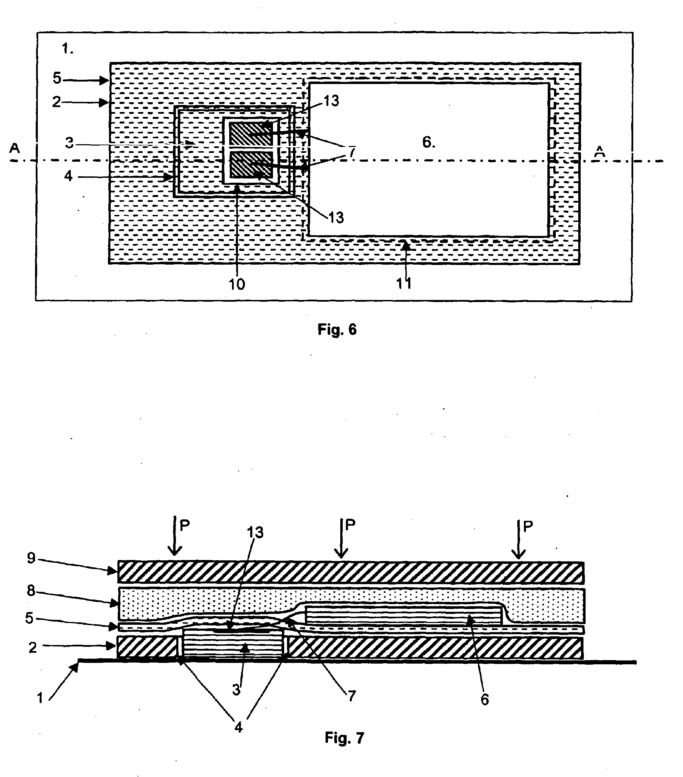

La figure 6 montre une vue de l'assemblage d'un module selon l'invention comportant un circuit électronique (6) connecté à l'élément (3). Sur la surface de travail (1), la première feuille isolante (2) comporte une fenêtre (4) où est logé l'élément (3) qui est muni de deux plages conductrices de connexion (13) sur sa face interne. La face externe de l'élément (3) comme celle de la feuille isolante (2) est en contact avec la table de travail (1). L'ensemble formé par l'élément (3) et la feuille isolante (2) est recouvert entièrement par le film adhésif (5) qui est muni d'une fenêtre (10) à l'endroit des plages conductrices de connexion (13) de l'élément (3). Celles-ci sont ainsi entièrement dégagées pour permettre le soudage des connexions (7) provenant du circuit électronique (6) posé sur le film adhésif (5).

Selon la variante où l'élément (3) est constitué par un noyau inerte, des plages conductrices de connexion sont posées séparément sur la face interne de l'élément avant la mise en place du film adhésif (5). Ces plages sont ensuite connectées au circuit électronique (6). Lorsque le module est terminé, le noyau est retiré et le fond de la cavité résultante comporte des contacts. Ces derniers permettent la connexion d'un composant actif, de forme similaire au noyau retiré, qui sera inséré ultérieurement dans la cavité. Le composant peut être soit amovible comme une pile, soit fixe comme un affichage, dans ce dernier cas il sera collé et/ou chassé dans la cavité, les connexions aux contacts étant réalisées par pression ou avec de la colle conductrice par exemple.

Selon une autre variante de l'invention, le circuit électronique (6) comporte des connexions (7) qui se terminent sur la face interne de l'élément (3) constitué par un noyau inerte de façon à former des plages de contacts au fond de la cavité lorsque le noyau est enlevé.

La coupe de la figure 7 selon l'axe A-A montre la superposition des différents éléments d'un module avant pressage ou laminage qui s'effectue selon les flèches P. Le circuit électronique (6) est placé sur le film adhésif (5) à proximité de la fenêtre (4) afin de faciliter sa connexion à l'élément (3). Ce circuit (6) peut aussi entourer l'élément (3) s'il s'agit par exemple d'une antenne de forme quelconque connectée à une puce, cette dernière serait placée à côté de l'élément. Dans d'autres cas, des portions du circuit (6) peuvent recouvrir partiellement l'élément (3) lorsque par exemple la surface disponible devient faible à cause des dimensions extérieures importantes du circuit par rapport à celles du module. La position du circuit (6) est maintenue par adhérence sur le film adhésif (5). Une couche de matière de remplissage (8) est ensuite répartie si nécessaire sur tout ou partie de la surface du film adhésif (5) et du circuit électronique (6).

On entend par matière de remplissage une substance sous forme d'une résine liquide ou pâteuse, un film thermo-fusible ou encore un élément poreux et souple qui peut être enduit d'une substance adhésive (mousse, agglomérat de matière plastique). Le rôle d'une telle matière est de combler les creux et de compenser les reliefs de surface dus à l'assemblage des divers éléments du module. Suivant sa nature et sa composition chimique, cette matière est capable de se solidifier par exemple sous l'action d'un refroidissement, d'un échauffement ou d'un rayonnement UV.

Finalement une seconde feuille isolante (9) constituant l'autre face du module est superposée puis pressée (P) sur la couche de remplissage (8). Chacune de ces feuilles isolantes (2, 9) peut comporter un décor sur leurs faces externes qui constituent aussi les faces externes du module.

Le procédé de fabrication d'un module comprenant au moins un élément (3) ayant une première face affleurant la surface externe du module, et une seconde face présentant des plages conductrices de connexion (13) et un circuit électronique (6) est caractérisé par les étapes supplémentaires suivantes:
- poser un circuit électronique (6) dans une zone voisine de la fenêtre (4) contenant l'élément (3),
- connecter les plages de connexions (13) de l'élément (3) au circuit électronique (6),
- répartir une couche de matière de remplissage (8) sur le film adhésif (5), sur la première feuille isolante (2) et sur le circuit électronique (6),
- superposer une seconde feuille isolante (9) sur la couche de matière de remplissage (8),
- laminer l'ensemble préalablement formé.

Ce procédé débute par les trois premières étapes correspondant à celles du procédé de fabrication du module dépourvu de circuit électronique (6) décrit plus haut. Les étapes supplémentaires concernent la mise en place du circuit (6), sa connexion à l'élément (3) apparent et son enrobage avec la matière de remplissage (8) assurant sa protection et la tenue du module.

Le film adhésif (5) joue à la fois le rôle de protection de l'élément (3) et de la fenêtre (4) contre les pénétrations indésirables de matière de remplissage (8), tout en maintenant le positionnement du circuit électronique (6) lors de l'assemblage du module.

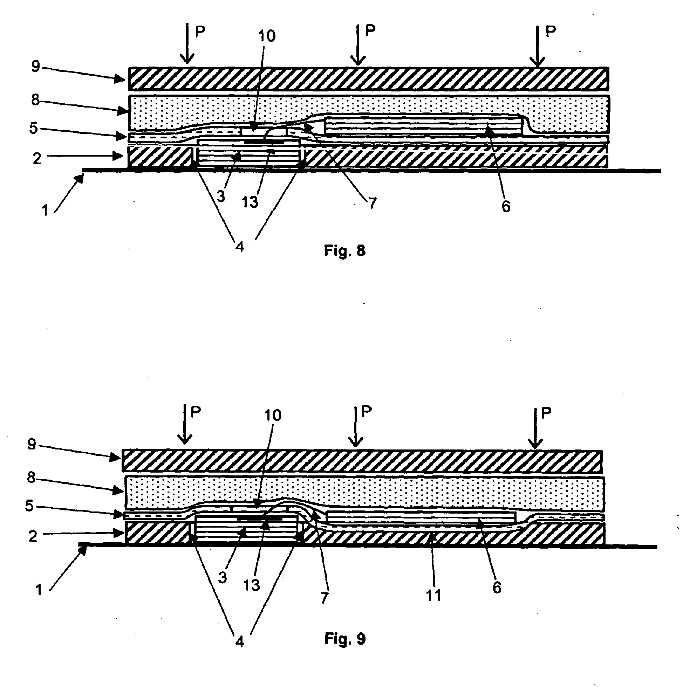

La figure 8 illustre une variante de l'invention où le film adhésif (5) comporte une fenêtre (10) venant se positionner en regard des plages conductrices de connexion (13) de l'élément (3). Le contour de la fenêtre (10) est adapté à celui de la zone de la face interne de l'élément (3) occupée par les plages de connexion (13). Par exemple, le contour de la fenêtre (10) peut entourer un groupe de plusieurs contacts ou entourer chaque plage de contact individuellement. Le but de cette fenêtre (10) est de laisser les plages de connexion (13) libres de toute substance pouvant entraver le soudage des connexions (7) pour relier l'élément (3) au circuit électronique (6). La fenêtre (10) est formée avant l'assemblage du film adhésif (5) sur la première feuille isolante (2) soit par étampage ou découpage, soit par attaque chimique..

Selon la variante illustrée par la figure 7 où le film adhésif (5) est exempt de fenêtre, le soudage peut être possible car certaines matières constituant le film adhésif (5) s'évaporent complètement à la chaleur du soudage sans laisser de dépôts sur les plages conductrices (13).

La figure 9 illustre une variante de l'invention avec une cavité (11) creusée dans la première feuille isolante (2) dont le contour s'adapte à celui du circuit électronique (6). Cette cavité est en général fraisée avant ou après la formation de la fenêtre (4) destinée à recevoir l'élément (3). La profondeur de la cavité (11) dépend de l'épaisseur de la première feuille (2) et de celle du circuit électronique (6) qui sera placé et collé sur le film adhésif (5) qui garnit le fond de la cavité (11). L'épaisseur finale d'un module pouvant être imposée par des normes ou par des contraintes de l'application, la cavité (11) permet d'intégrer un circuit (6) plus épais dans le module sans dépasser la dimension prescrite.

La cavité (11) peut également être formée par une ou la superposition d'ouvertures dans une ou plusieurs feuilles intermédiaires (2b, 2c) empilées puis laminées sur la première feuille (2, 2a). Chacune de ces feuilles comprend également une fenêtre (4, 4a, 4b, 4c) pour l'élément (3), voir l'exemple de la figure 3.

Selon une variante du procédé de l'invention le film adhésif (5) peut être posé dans une première phase directement sur la surface de travail (1). La fenêtre (10) destinée à dégager les plages de connexion (13) de l'élément (3) est ensuite formée avant la mise en place du circuit électronique (6). L'ensemble film circuit est ensuite transféré vers un autre emplacement où est disposée la première feuille isolante (2) munie de la fenêtre (4) contenant l'élément (3). Les étapes de connexion de l'élément (3) au circuit (6), d'apport de la matière de remplissage (8) et du laminage de la seconde feuille isolante (9) se succèdent d'une manière analogue à celle du procédé précédemment décrit. Cette variante du procédé permet d'accroître la rapidité de production des modules en bénéficiant de la simultanéité des premières étapes. Par exemple, l'étampage de la fenêtre (4) et le fraisage de la cavité (11) dans la première feuille isolante (2) ainsi que le placement de l'élément (3) dans la fenêtre (4) peuvent s'effectuer en même temps que l'étampage de la fenêtre (10) dans le film adhésif (5) et le positionnement du circuit électronique (6) sur le film (5).

## Revendications

1. Procédé de fabrication d'un module électronique comprenant deux feuilles isolantes (2, 9) définissant ses faces externes, au moins un élément (3) ayant une face affleurant sensiblement une surface externe du module et un circuit électronique (6) agencé entre les deux feuilles isolantes, **caractérisé par** les étapes suivantes:
- apporter au moins une première feuille isolante (2) comportant une fenêtre (4) destinée à loger un élément (3).
- insérer l'élément (3) dans la fenêtre (4) de la première feuille isolante (2),
- superposer un film adhésif de protection (5) s'étendant au moins dans la région entre l'élément (3) et les bords de ladite fenêtre (4), ledit film adhésif de protection (5), étant enduit ou constitué d'une substance adhésive activée soit à la température ambiante, soit sous l'effet de la chaleur et/ou de la pression, maintient l'élément (3) dans ladite fenêtre (4),
- poser un circuit électronique (6) dans une zone voisine de la fenêtre (4) contenant l'élément (3),
- apporter une matière de remplissage (8) sur l'ensemble formé par la première feuille isolante (2), l'élément (3), le film de protection (5), et le circuit électronique (6),
- superposer une seconde feuille isolante (9) sur la matière de remplissage (8),
- presser ou laminer l'assemblage préalablement formé, la matière de remplissage formant une couche compensant les reliefs de surface dus à l'assemblage du module électronique.

2. Procédé selon la revendication 1 **caractérisé en ce que** le contour de la fenêtre (4) de la première feuille isolante (2) est adapté au contour de l'élément (3).

3. Procédé selon la revendication 1 ou 2, l'élément (3) étant d'épaisseur plus grande que la première feuille isolante (2a) et logé dans la fenêtre (4a), **caractérisé en ce que** plusieurs feuilles isolantes (2a, 2b, 2c) sont empilées, les contours des fenêtres (4a, 4b, 4c) de chaque feuille coïncidant, et l'épaisseur totale de l'empilement étant sensiblement égale à celle de l'élément (3) logé dans les fenêtres (4a, 4b, 4c) de chaque feuille (2a, 2b, 2c), le film adhésif de protection (5) étant placé sur l'empilement (2a, 2b, 2c) en recouvrant au moins le pourtour de la fenêtre (4c) de la dernière feuille (2c) de l'empilement.

4. Procédé selon la revendication 1 ou 2, l'élément (3) étant d'épaisseur plus grande que la première feuille isolante (2a) et logé dans la fenêtre (4a), **caractérisé en ce que** le film adhésif de protection (5) est posé sur l'élément (3) de manière à s'étendre aussi sur le pourtour de la fenêtre (4a) de ladite première feuille (2a), des feuilles supplémentaires (2b, 2c) munies chacune d'une fenêtre (4b, 4c) sont empilées, le contour des fenêtres (4b, 4c) de chaque feuille coïncidant avec le contour de la fenêtre (4a) de la première feuille (2a), l'épaisseur de l'ensemble des feuilles (2a, 2b, 2c) étant sensiblement égale à l'épaisseur de l'élément (3).

5. Procédé selon l'une des revendications 1 à 4, **caractérisé en ce que** l'élément (3) inséré dans la fenêtre (4) de la première feuille isolante (2) est constitué par un composant électronique connecté au circuit électronique (6).

6. Procédé selon la revendication 5, l'élément (3) ayant une première face affleurant la surface externe du module, et une seconde face présentant des plages conductrices (13) de connexion, **caractérisé en ce qu'**il comprend une étape de connexion des plages conductrices (13) de l'élément (3) au circuit électronique (6) succédant à la pose du circuit électronique (6).

7. Procédé selon la revendication 5, **caractérisé en ce qu'**il comprend, préalablement à l'apport de la matière de remplissage (8), une étape de pose de plages conductrices (13) de connexions sur la face interne de l'élément (3) opposée à la face affleurant la surface externe du module, lesdites plages conductrices (13) de connexions étant ensuite connectées au circuit électronique (6).

8. Procédé selon la revendication 5, **caractérisé en ce que** le circuit électronique (6) comporte des connexions (7) se terminant sur la face interne de l'élément (3) opposée à la face affleurant la surface externe du module.

9. Procédé selon la revendication 1 ou 5, **caractérisé en ce que**, préalablement à l'application du film adhésif de protection (5) sur l'ensemble formé de la première feuille isolante (2) et de l'élément (3), le circuit électronique (6) est placé sur ledit film adhésif de protection (5) et l'ensemble formé du film adhésif de protection (5) et du circuit électronique (6) est appliqué sur l'ensemble formé de la première feuille isolante (2) et de l'élément (3).

10. Procédé selon l'une des revendications 5 à 8, **caractérisé en ce que** le film de adhésif protection (5) comporte au moins une fenêtre (10) située en regard de ou des plages conductrices (13) de connexion de l'élément (3).

11. Procédé selon l'une des revendications 1 à 4, **caractérisé en ce que** l'élément (3) inséré dans la fenêtre (4) de la première feuille isolante (2) est constitué par un noyau inerte destiné à être retiré à la fin du procédé de fabrication du module, laissant une cavité ayant la forme du noyau préalablement inséré sur une des faces dudit module, ladite cavité servant à une insertion ultérieure d'un composant électronique fixe ou amovible.

12. Procédé selon la revendication 11, **caractérisé en ce qu'**il comprend, préalablement à l'apport de la matière de remplissage (8), une étape de pose de plages (13) conductrices de connexions sur la face interne de l'élément (3) opposée à la face affleurant la surface externe du module, lesdites plages conductrices (13) de connexions étant ensuite connectées au circuit électronique (6).

13. Procédé selon la revendication 11, **caractérisé en ce que** le circuit électronique (6) comporte des connexions (7) se terminant sur la face interne de l'élément (3) opposée à la face affleurant la surface externe du module, lesdites connexions formant des plages conductrices (13) de connexions au fond de la cavité lorsque l'élément (3) est retiré.

14. Procédé selon l'une des revendications 11 à 13, **caractérisé en ce que** le film de adhésif protection (5) comporte au moins une fenêtre (10) située en regard de ou des plages conductrices (13) de connexion de l'élément (3).

15. Procédé selon l'une des revendications 1 à 14, **caractérisé en ce qu'**au moins la première feuille isolante (2) comporte une cavité (11), le contour de ladite cavité (11) étant adapté au contour du circuit électronique (6) qui est placé dans cette cavité (11).

16. Module électronique comprenant un assemblage d'au moins deux feuilles isolantes (2, 9) et d'au moins un élément (3), une première feuille isolante (2) définissant l'une des faces du module comportant au moins une fenêtre (4) dans laquelle est logé l'élément (3), une face dudit élément (3) affleurant la surface externe de ladite première feuille (2), la seconde feuille isolante (9) constituant l'autre face du module, **caractérisé en ce qu'**il comprend en outre un circuit électronique (6) placé entre les deux feuilles isolantes (2, 9) dans une couche de matière de remplissage (8) et un film adhésif de protection (5) qui s'étend dans une région recouvrant au moins la fenêtre (4) dans laquelle est logé l'élément (3) et situé entre la première feuille (2) et la couche de matière de remplissage (8).

17. Module électronique selon la revendication 16, **caractérisé en ce que** la face interne de l'élément (3) opposée à la face affleurant la surface externe du module comporte des plages conductrices (13) de connexions connectées au circuit électronique (6).

18. Module électronique selon les revendications 16 et 17 **caractérisé en ce que** le film adhésif de protection (5) comporte au moins une fenêtre (10) en regard des plages conductrices (13) de connexion de l'élément (3).

19. Module électronique selon l'une des revendications 16 à 18, **caractérisé en ce que** les faces externes des feuilles isolantes (2, 9) constituant les faces externes du module comportent un décor ou un marquage.

20. Module électronique selon la revendication 16, **caractérisé en ce que** l'élément (3) inséré dans la fenêtre (4) de la première feuille isolante (2) est constitué par un noyau inerte destiné à être retiré laissant une cavité ayant la forme du noyau sur une des faces dudit module, ladite cavité servant à une insertion ultérieure d'un composant électronique fixe ou amovible.

21. Module électronique selon la revendication 20, **caractérisé en ce que** le fond de la cavité résultante après retrait de l'élément (3) comporte des plages conductrices (13) de connexion reliées au circuit électronique (6).

22. Module électronique selon l'une des revendications 16 à 19, **caractérisé en ce que** l'élément (3) est constitué par un composant électronique.

## Claims

1. Manufacturing process of an electronic module including at least two insulating sheets (2, 9) defining its external faces (F1, F2), at least one element (3) having a face flushing with an external surface of the module and an electronic circuit (6) embedded between the two insulating sheets, **characterized by** the following steps:
- placing at least one first insulating sheet (2) including one window (4) intended to lodge an element (3),
- inserting the element (3) into the window (4) of the first insulating sheet (2),
- stacking an adhesive protection film (5) extending at least over a region between the element (3) and the edges of said window (4), said adhesive protection film (5) being coated or made up of an adhesive substance activated either at room temperature, or under the effect of heat and/or pressure, maintains the element (3) in said window (4),
- placing an electronic circuit (6) in an area close to the window (4) containing the element (3),
- providing filling material (8) on the set formed by the first insulating sheet (2), the element (3), the adhesive protection film (5) and the electronic circuit (6),
- stacking a second insulating sheet (9) on the filling material (8),
- pressing or laminating the assembly previously formed, the filling material (8) forming a layer compensating the surface relief due to the assembling of the electronic module.

2. Process according to claim 1 **characterized in that** the outline of the window (4) of the first insulating sheet (2) adapts to the outline of the element (3).

3. Process according to claim 1 or 2, the element (3), lodged in the window (4), being thicker than the first insulating sheet (2a), **characterized in that** several insulating sheets (2a, 2b, 2c) are stacked, with the outlines of the windows (4a, 4b, 4c) of each sheet coinciding, and the total thickness of the stack being substantially equal to the thickness of the element (3) lodged in the windows (4a, 4b, 4c) of each sheet (2a, 2b, 2c), the adhesive protection film (5) being placed on the stack (2a, 2b, 2c) by covering at least the outline of the window (4c) of the last sheet (2c) of the stack.

4. Process according to claim 1 or 2, the element (3), lodged in the window (4a), being thicker than the first insulating sheet (2a) **characterized in that** the adhesive protection film (5) is placed on the element (3) in such a way as to also extend over the outline of the window (4a) of said first sheet (2a), supplementary sheets (2b, 2c) each provided with a window (4b, 4c) are stacked, the outline of the windows (4b, 4c) of each sheet coinciding with the outline of the window (4a) of the first sheet (2a), and the thickness of the assembly of sheets (2a, 2b, 2c) is substantially equal to the thickness of the element (3).

5. Process according to any one of the claims 1 to 4, **characterized in that** the element (3) inserted in the window (4) of the first insulating sheet (2) is made up of an electronic component connected to the electronic circuit (6).

6. Process according to claim 5, the element (3) having a first face flushing with the external surface of the module and a second face presenting conductive connection areas (13), **characterized in that** it comprises a step of connection of the conductive connection areas (13) of the element (3) to the electronic circuit (6) succeeding the step of placement of the electronic circuit (6).

7. Process according to claim 5, **characterized in that** it comprises, prior providing the filling material (8), a step of placing conductive connection areas (13) on the internal face of the element (3) opposed to the face flushing with the external surface of the module, said conductive connections areas (13) being than connected to the electronic circuit (6).

8. Process according to claim 5, **characterized in that** the electronic circuit (6) includes connections (7) ending on the internal face of the element (3) opposed to the face flushing with the external face of the module.

9. Process according to claim 1 or 5, **characterized in that**, prior to the application of the adhesive protection film (5) on the assembly formed by the first insulating sheet (2) and the element (3), the electronic circuit (6) is placed on said adhesive protection film (5) and the assembly formed by the protection film (5) and the electronic circuit (6) is applied onto the assembly formed by the first insulating sheet (2) and the element (3).

10. Process according to any one of the claims 5 to 8, **characterized in that** the adhesive protection film (5) includes at least one window (10) facing the conductive connection areas (13) of the element (3).

11. Process according to any one of the claims 1 to 4, **characterized in that** the element (3) inserted in the window (4) of the first insulating sheet (2) is constituted by an inert core intended to be removed at the end of the module manufacturing process, leaving a cavity having the shape of the core previously inserted on one of the faces of said module, said cavity being used for a subsequent insertion of a fixed or removable electronic component.

12. Process according to claim 11, **characterized in that** it comprises, prior providing the filling material (8), a step of placing conductive connection areas (13) on the internal face of the element (3) opposed to the face flushing with the external surface of the module, said conductive connection areas (13) being than connected to the electronic circuit (6).

13. Process according to claim 11, **characterized in that** the electronic circuit (6) includes connections (7) ending on the internal face of the element (3) opposed to the face flushing with the external face of the module, said connections (7) forming conductive connection areas (13) at the bottom of the cavity when the element (3) is removed.

14. Process according to any one of the claims 11 to 13, **characterized in that** the adhesive protection film (5) includes at least one window (10) facing the connection areas (13) of the element (3).

15. Process according to any one of the claims 1 to 14, **characterized in that** at least the first insulating sheet (2) includes a cavity (11), the outline of said cavity (11) adapting to the outline of the electronic circuit (6) placed in said cavity (11).

16. Electronic module comprising an assembly of at least two insulating sheets (2, 9) and at least one element (3), a first insulating sheet (2) defining one of the faces (F1, F2) of the module including at least one window (4) in which the element (3) is lodged, one face (F1) of said element (3) flushing with the external surface of said first sheet (2) the second insulating sheet (9) constituting the other face (F2) of the module, **characterized in that** it further comprises an electronic circuit (6) embedded between the two insulating sheets (2, 9) in a layer of filling material (8) and an adhesive protection film (5) extending over a region covering at least the outline of the window (4) in which is lodged the element (3) and situated between the first insulating sheet (2) and the layer of filling material (8).

17. Electronic module according to claim 16, **characterized in that** the internal face of the element (3) opposed to the face flushing with the external surface of the module includes conductive connection areas (13) connected to the electronic circuit (6).

18. Electronic module according to the claims 16 and 17, **characterized in that** the adhesive protection film (5) includes at least one window (10) facing the conductive connection areas (13) of the element (3),

19. Electronic module according to any one of the claim 16 to 18, **characterized in that** the external faces of the insulating sheets (2, 9) constituting the external faces (F1, F2) of the module include a decoration or a marking.

20. Electronic module according to claim 16, **characterized in that** the element (3) inserted in the window (4) of the first insulating sheet (2) is constituted by an inert core intended to be removed leaving a cavity having the shape of the core on one of the faces of said module, said cavity being made to be used for the subsequent insertion of a fixed or removable electronic component.

21. Electronic module according to claim 20, **characterized in that** the bottom of the resulting cavity, after the element (3) has been removed, includes conductive connection areas (13) connected to the electronic circuit (6).

22. Electronic module according to any one of the claim 16 to 19, **characterized in that** the element (3) is constituted by an electronic component.

## Patentansprüche

1. Verfahren zur Herstellung eines Elektronikmoduls mit zwei isolierenden Folien (2, 9) die seiner Aussenseiten darstellen und zumindest einem Element (3) mit einer mit der Aussenseite des Moduls bündigen Aussenseite und eine elektronische Schaltung (6), die zwischen die zwei isolierenden Folien (2, 9) gelegt ist, **gekennzeichnet durch** die folgenden Schritte:
- Auflegen zumindest einer ersten isolierenden Folie (2) wobei die Folie (2) zumindest ein Fenster (4) aufweist, in dem ein Element (3) untergebracht wird,
- Einsetzen des Elements (3) in das Fenster (4) der isolierenden Folie (2),
- Darüberlegen eines Schutzfims (5), der sich über einen Bereich erstreckt, der zumindest den Aussenumfang des Fensters (4) abdeckt, wobei der Schutzfilm (5) mit einer Haftsubstanz bestrichen ist oder aus einer Haftsubstanz besteht, die entweder bei Umgebungstemperatur oder unter der Einwirkung von Hitze und/oder Druck aktiviert wird, hält das Element (3) im Fenster (4),
- Auflegen der elektronischen Schaltung (6) in einem Bereich nahe beim Fenster (4), das das Element (3) enthält,
- Verteilen einer Schicht von Füllmaterial (8) auf die Anordnung aus erster isolierender Folie (2), Element (3), Schutzfilm (5) und elektronischer Schaltung (6),
- Auflegen einer zweiten isolierenden Folie (9) auf die Füllmaterialschicht (8),
- Pressen oder laminieren der vorgebildeten Anordnung, das Füllmaterial bildet eine Schicht die Oberflächenkonturen kompensiert, die sich aus dem Zusammenfügen des Elektronikmoduls ergeben.

2. Verfahren nach Anspruch 1, **dadurch gekennzeichnet, dass** die Konturen des Fensters (4) der isolierenden Folie (2) an die Konturen des Elements (3) angepasst sind.

3. Verfahren nach Anspruch 1 oder 2, wobei das Element (3) dicker als eine erste isolierende Folie (2a) ist und im Fenster (4a) untergebracht wird, **dadurch gekennzeichnet, dass** mehrere isolierende Folien (2a, 2b, 2c) übereinander gestapelt werden, die Konturen der Fenster (4a, 4b, 4c) aller isolierenden Folien übereinstimmen und die Gesamtdicke des Stapels im Wesentlichen gleich der des Elements (3) ist, das in den Fenstern (4a, 4b, 4c) aller Folien (2a, 2b, 2c) untergebracht ist, wobei der Haftfilm auf den Stapel (2a, 2b, 2c) aufgebracht wird, indem zumindest der Aussenumfang des Fensters (4c) der letzten Folie (2c) des Stapels abgedeckt wird.

4. Verfahren zur nach Anspruch 1 oder 2, wobei das Element (3) dicker als eine erste isolierende Folie (2a) ist und in dem Fenster (4a) untergebracht wird, **dadurch gekennzeichnet, dass** der Haftfilm (5) so auf das Element (3) aufgebracht wird, dass er sich auch über den Aussenumfang des Fensters (4a) der ersten Folie (2a) erstreckt, zusätzliche Folien (2b, 2c), die mit je einem Fenster (4b, 4c) versehen sind, darüber gestapelt werden, die Konturen der Fenster (4b, 4c) jeder Folie mit den Konturen des Fensters (4a) der ersten Folie (2a) übereinstimmen und die Gesamtdicke der Folien (2a, 2b, 2c) im Wesentlichen gleich der Dicke des Elements (3) ist.

5. Verfahren nach einer der Ansprüche 1 bis 4, **dadurch gekennzeichnet, dass** das in das Fenster (4) der ersten isolierenden Folie (2) eingesetzte Element (3) aus einem elektronischen Bauteil besteht der an der elektronischen Schaltung (6) verbunden ist.

6. Verfahren nach Anspruch 5, wobei das Element (3) eine mit der Aussenseite des Moduls bündige erste Aussenseite sowie eine zweite Seite besitzt, die leitende Verbindungsbereiche (13) aufweist, **gekennzeichnet durch** einen zusätzlichen Schritt zur Verbindung der Verbindungsbereiche (13) des Elements (3) mit der elektronischen Schaltung (6) der auf das Auflegen der elektronischen Schaltung (6) folgt.

7. Verfahren nach Anspruch 5, **dadurch gekennzeichnet, dass** vor der Verteilung der Schicht von Füllmaterial (8) leitende Verbindungsbereiche auf die Innenseite des Elements (3), die zu der mit der Aussenseite des Moduls bündigen Seite entgegen gesetzt ist, aufgebracht werden, wobei die Verbindungsbereiche (13) dann mit der elektronischen Schaltung (6) verbunden werden.

8. Verfahren nach Anspruch 5, **dadurch gekennzeichnet, dass** die elektronische Schaltung (6) Verbindungen (7) aufweist, die auf der Innenseite des Elements (3) enden, die zu der mit der Aussenseite des Moduls bündigen Seite entgegengesetzt ist.

9. Verfahren nach Anspruchen 1 oder 5, **dadurch gekennzeichnet, dass** vor Aufbringen des Schutzfilms (5) auf die Anordnung aus erster isolierender Folie (2) und Element (3) die elektronische Schaltung (6) auf den Schutzfilm (5) gelegt und die Anordnung aus Schutzfilm (5) und elektronischer Schaltung (6) auf die Anordnung aus erster isolierender Folie (2) und Element (3) aufgebracht wird.

10. Verfahren nach einer der Ansprüchen 5 bis 8, **dadurch gekennzeichnet, dass** der Schutzfilm (5) zumindest ein Fenster (10) aufweist, das gegenüber dem oder den Verbindungsbereichen (13) des Elements (3) liegt.

11. Verfahren nach einer der Ansprüche 1 bis 4, **dadurch gekennzeichnet, dass** das in das Fenster (4) der isolierenden Folie (2) eingesetzte Element (3) aus einem inerten Kern besteht, der dafür bestimmt ist, am Ende des Verfahrens der Herstellung des Moduls herausgenommen zu werden, um einen Hohlraum zu hinterlassen, der die Gestalt des zuvor in eine der Aussenseiten des Moduls eingesetzten Kerns besitzt, wobei der Hohlraum dem späteren Einsetzen eines ortsfestes oder abnehmbares Elektronikbauteils dient.

12. Verfahren nach Anspruch 11, **dadurch gekennzeichnet, dass** vor der Verteilung der Schicht von Füllmaterial (8) leitende Verbindungsbereiche auf die Innenseite des Elements (3), die zu der mit der Aussenseite des Moduls bündigen Seite entgegen gesetzt ist, aufgebracht werden, wobei die Verbindungsbereiche (13) dann mit der elektronischen Schaltung (6) verbunden werden.

13. Verfahren nach Anspruch 11, **dadurch gekennzeichnet, dass** die elektronische Schaltung (6) Verbindungen (7) aufweist, die auf der Innenseite des Elements (3) enden, die zu der mit der Aussenseite des Moduls bündigen Seite entgegengesetzt ist.

14. Verfahren nach einer der Ansprüchen 11 bis 13, **dadurch gekennzeichnet, dass** der Schutzfilm (5) zumindest ein Fenster (10) aufweist, das gegenüber dem oder den Verbindungsbereichen (13) des Elements (3) liegt.

15. Verfahren nach einer der Ansprüchen 1 bis 14, **dadurch gekennzeichnet, dass** zumindest die erste isolierende Folie (2) einen Hohlraum (11) aufweist, wobei sich die Konturen des Hohlraums (11) an die Konturen der elektronischen Schaltung (6) anpassen, die in den Hohlraum (11) platziert wird.

16. Elektronikmodul, eine Anordnung aus zumindest zwei isolierenden Folien (2, 9) und zumindest einem Element (3) umfassend, wobei eine erste isolierende Folie (2), die eine der Aussenseiten des Moduls darstellt, zumindest ein Fenster (4) aufweist, in dem das Element (3) untergebracht wird, eine Aussenseite des Elements (3) mit der Oberfläche der ersten Folie (2) bündig ist und auf der Aussenseite des Moduls erscheint und die zweite isolierende Folie (9) die andere Aussenseite des Moduls darstellt, **dadurch gekennzeichnet, dass** er eine elektronische Schaltung (6) umfasst, die zwischen die zwei isolierenden Folien (2, 9) in einer Füllmaterialschicht (8) gelegt ist und einen Haftfilm (5) umfasst, der sich über einen Bereich erstreckt, der zumindest den Aussenumfang des Fensters (4) des Elements (3) erfasst und in einem Bereich zwischen der ersten Folie (2) und der Füllmaterialschicht (8) liegt.

17. Elektronikmodul nach Anspruch 16, **dadurch gekennzeichnet, dass** die Innenseite des Elements (3), die mit der Aussenseite des Moduls bündigen Seite entgegengesetzt ist, leitende Verbindungsbereiche (13) umfasst, die an der elektronischen Schaltung (6) verbunden sind.

18. Elektronikmodul nach Ansprüchen 16 und 17, **dadurch gekennzeichnet, dass** der Haftfilm (5) ein Fenster (10) gegenüber den leitenden Verbindungsbereichen (13) des Elements (3) aufweist.

19. Elektronikmodul nach einer der Ansprüchen 16 bis 18, **dadurch gekennzeichnet, dass** die Aussenseiten der isolierenden Folien (2, 9), die die Aussenseiten des Moduls darstellen, eine Dekoration oder eine Markierung aufweisen.

20. Elektronikmodul nach Anspruch 16, **dadurch gekennzeichnet, dass** das in das Fenster (4) der isolierenden Folie (2) eingesetzte Element (3) aus einem inerten Kern besteht, der dafür bestimmt ist, entnommen zu werden und auf einer der Aussenseiten des Moduls einen Hohlraum zu hinterlassen, der die Gestalt des Kerns besitzt und dem späteren Einsatz eines ortsfesten oder abnehmbaren elektronischen Bauteils dient.

21. Elektronikmodul nach Anspruch 20, **dadurch gekennzeichnet, dass** der Boden des sich nach der Entnahme des Elements (3) ergebenden Hohlraums leitende Kontaktbereiche (13) aufweist, die mit der elektronischen Schaltung (6) verbunden sind.

22. Elektronikmodul nach einer der Ansprüchen 16 bis 19, **dadurch gekennzeichnet, dass** das Element (3) aus einem elektronischen Bauteil besteht.
